# FASCICULE DE BREVET EUROPEEN

(11) **EP 3 957 028 B1**
(45) Date de publication et mention de la délivrance du brevet: **07.06.2023**
(21) Numéro de dépôt: 20719559.5
(22) Date de dépôt: 06.04.2020
(51) Int. Cl.: H04W 4/029, H04W 24/02, H04W 36/00, H04W 48/18, H04W 4/02

(54) **PROCÉDÉ DE PRÉDICTION D'UNE QUALITÉ DE SIGNAL ET/OU DE SERVICE ET DISPOSITIF ASSOCIÉ**
VERFAHREN ZUR VORHERSAGE EINER SIGNAL- UND/ODER DIENSTQUALITÄT UND ZUGEHÖRIGE VORRICHTUNG
METHOD FOR PREDICTING A SIGNAL AND/OR SERVICE QUALITY AND ASSOCIATED DEVICE

(30) Priorité: 15.04.2019 FR 1903992
(43) Date de publication de la demande: 23.02.2022
(73) Titulaire: Continental Automotive Technologies GmbH, 30165 Hannover (DE)
(72) Inventeur: PIRIOU, Simon, 31100 TOULOUSE (FR); VIAL, Grégory, 31100 TOULOUSE (FR)
(74) Mandataire: Kaabouni, Fatima
(86) Numéro de dépôt international: PCT/EP2020/059719
(87) Numéro de publication internationale: WO 2020/212176

(56) Documents cités:
- EP-A1- 2 346 283
- WO-A1-2018/011742
- FR-A1- 3 095 099
- FR-A1- 3 095 101
- US-B1- 9 900 790

## Description

### Domaine technique

L'invention concerne un procédé pour la prédiction d'une qualité de signal et/ou de service d'un dispositif susceptible d'être connecté à une antenne radiofréquence, à un instant donné et pour une position donnée du dispositif, selon le préambule de la revendication 1. L'invention conerne aussi un produit programme d'ordinateur selon la revendication 10 et un calculateur selon la revendication 11.

### Technique antérieure

Il existe actuellement des cartes permettant d'identifier des zones couvertes et des zones non couvertes, dites zones blanches, par des antennes radiofréquence. Ces cartes sont établies suite à la réception, pour une pluralité de dispositifs connectés à une cellule du réseau téléphonique mobile ou à une antenne WIFI par exemple, d'informations permettant d'estimer la qualité de la connexion entre le dispositif et l'antenne à laquelle il est connecté. Malheureusement, ces cartes sont établies sur la base d'un traitement statistique des données et ne permettent pas de prédire la qualité de signal ou la qualité de service qui sera obtenue à un instant donné pour un dispositif ayant une position donnée.

La prédiction d'une qualité de service à un instant donné pour une position donnée présente un intérêt pour diverses applications liées notamment au transfert de données via le réseau internet afin de pouvoir planifier la transmission de données.

L'une de ces applications concerne par exemple les services pour véhicules connectés qui remontent des données à un serveur distant de type « cloud » par le biais de communications sans fil radiofréquences, à l'aide d'un réseau de téléphonie mobile, pour faire du calcul déporté et renvoyer au véhicule différentes informations. D'autres applications concernent la prédiction d'une qualité de service pouvant être obtenue par exemple sur un réseau WIFI en cas d'affluence, par exemple dans des aéroports et d'adapter en fonction les stratégies de partage et de transmission des données.

Un procédé selon le préambule de la revendication 1 est par exemple connu par EP 2 346 283 A1.

### Exposé de l'invention

L'invention a pour but notamment de pallier les inconvénients de l'art antérieur décrits ci-avant.

En particulier, un but de l'invention est de proposer un procédé de prédiction d'une qualité de service ou de signal pouvant être obtenue à un instant donné et pour une position donnée d'un dispositif apte à se connecter à une antenne radiofréquence.

Un autre but de l'invention est de prendre en compte les facteurs extérieurs pouvant influencer la qualité de service ou de signal tels que les conditions météorologiques ou la saturation de l'antenne.

Un autre but de l'invention est de pouvoir prédire une qualité de service et/ou une qualité de signal pouvant être obtenue sur un itinéraire d'un véhicule sur le réseau routier.

Selon la revendication 1, l'invention est définie par un procédé de prédiction d'au moins un paramètre représentatif d'une qualité de signal et/ou d'une qualité de service susceptible d'être fournie à un dispositif lorsqu'il est connecté à une antenne radiofréquence parmi une pluralité d'antennes configurées pour établir une connexion avec ledit dispositif, le procédé étant mise en oeuvre par un calculateur.

Dans un mode de réalisation, le paramètre de diminution de la qualité de signal et/ou de service est un indicateur d'une condition météorologique affectant la propagation d'un signal radiofréquence dans l'air ou un paramètre représentatif du nombre de dispositifs connectés à une antenne.

Dans un mode de réalisation, le paramètre représentatif du nombre de dispositifs connectés à l'antenne est un nombre de dispositifs connectés à l'antenne mesuré ou prédit ou un nombre de dispositifs présents dans un environnement voisin de l'antenne et du dispositif.

Dans un mode de réalisation, l'étape de prédiction comprend la sélection d'au moins un modèle de prédiction parmi plusieurs modèles de prédiction, chaque modèle de prédiction ayant été préalablement entrainé par apprentissage supervisé à l'aide d'une base de données d'entrainement comprenant des données relatives aux dispositifs connectés à une antenne respective.

Dans un mode de réalisation, l'indicateur de la position du dispositif est une position relative du dispositif par rapport à une antenne respective, le modèle de prédiction sélectionné correspondant au modèle de prédiction entrainé à l'aide d'une base de données d'entrainement comprenant la position relative du dispositif par rapport à l'antenne respective. La position relative du dispositif peut comprendre un angle et une distance entre le dispositif et l'antenne respective.

Dans un mode de réalisation, le procédé comprend en outre la mise en oeuvre préalable d'un entrainement d'au moins un modèle de prédiction d'au moins un paramètre représentatif d'une qualité de service et/ou d'une qualité de signal susceptible d'être fournie par une antenne radiofréquence, comprenant :
une étape de constitution d'une base de données d'entrainement comprenant :
* une sous-étape de réception de données collectées par une pluralité de dispositifs, les données collectées comprenant, pour chaque dispositif :
   - la mesure d'au moins un paramètre représentatif d'une qualité de signal et/ou d'une qualité de service lorsque le dispositif est connecté à une antenne radiofréquence,
   - la position GNSS du dispositif lorsque le dispositif est connecté à l'antenne,
   - la date et l'instant de connexion à l'antenne,
*une sous-étape d'estimation, pour chaque dispositif connecté à une antenne à une date et à un instant de connexion donné, d'au moins un paramètre de diminution de la qualité de signal et/ou de service,
* une sous-étape de création d'au moins une base de données d'entrainement à partir d'au moins une partie des données collectées et d'au moins une partie des paramètres de diminution de la qualité de signal et/ou de service associée,
une étape d'entrainement d'au moins un modèle de prédiction par apprentissage supervisé d'au moins un paramètre représentatif d'une qualité de signal et/ou d'une qualité de service, à partir d'une base de données d'entrainement.

Dans un mode de réalisation, les données collectées comprennent en outre un identifiant de l'antenne à laquelle un dispositif a été connecté à une date et un instant de connexion donnés, l'étape de constitution d'une base de données d'entrainement comprend la création d'une pluralité de bases de données d'entrainement, chaque base de données d'entrainement comprenant des données relatives aux dispositifs connectés à une antenne respective ayant un identifiant respectif et des paramètres de diminution de la qualité de signal et/ou de service associés, et l'étape d'entrainement comprend l'entrainement d'un modèle de prédiction par apprentissage supervisé d'au moins un paramètre représentatif d'une qualité de signal et/ou d'une qualité de service sur chaque base de données d'entrainement de la pluralité de bases d'entrainement.

Dans un mode de réalisation, chaque base de données d'entrainement comprend une position relative de chaque dispositif par rapport à l'antenne respective à la date et à l'instant de connexion à l'antenne respective.

Dans un mode de réalisation, la position relative du dispositif par rapport à l'antenne respective comprend une distance et un angle entre le dispositif et l'antenne respective.

Dans le reste de la demande, l'expression «au moins un paramètre représentatif d'une qualité de signal et/ou d'une qualité de service » fait référence à au moins un paramètre de qualité de service, à au moins un paramètre de qualité de signal ou à au moins un paramètre représentant une combinaison de paramètres de qualité de service et/ou de qualité de signal.

A l'aide de ce ou de ces paramètres, il est possible, selon les cas, de déterminer une qualité de signal, une qualité de service et/ou une qualité de connexion prenant en compte plusieurs paramètres de qualité de service et donc une qualité d'expérience utilisateur.

Avantageusement, la prédiction d'une qualité de service pouvant être obtenue sur un itinéraire prédéterminé d'un véhicule sur un réseau routier permet de planifier la transmission de données dans des tronçons ayant une bonne qualité de service. Alternativement, cette prédiction peut permettre de choisir un itinéraire particulier parmi plusieurs itinéraires possibles afin de maximiser la qualité de service sur l'itinéraire emprunté.

Avantageusement, la prédiction d'une qualité de signal pouvant être obtenue sur un itinéraire prédéterminé d'un véhicule sur un réseau routier permet d'établir un itinéraire permettant d'éviter les zones blanches.

Selon la revendication 10, la présente invention est définie par un programme d'ordinateur comportant des instructions pour la mise en oeuvre d'un procédé de prédiction tel que défini dans le procédé lorsque ce programme est exécuté par un calculateur.

Selon la revendication 11, il est proposé un calculateur, configuré pour la mise en oeuvre du procédé selon la description qui précède.

### Brève description des dessins

D'autres caractéristiques, détails et avantages de l'invention apparaîtront à la lecture de la description détaillée ci-après, et à l'analyse des dessins annexés, sur lesquels :
**Fig. 1**

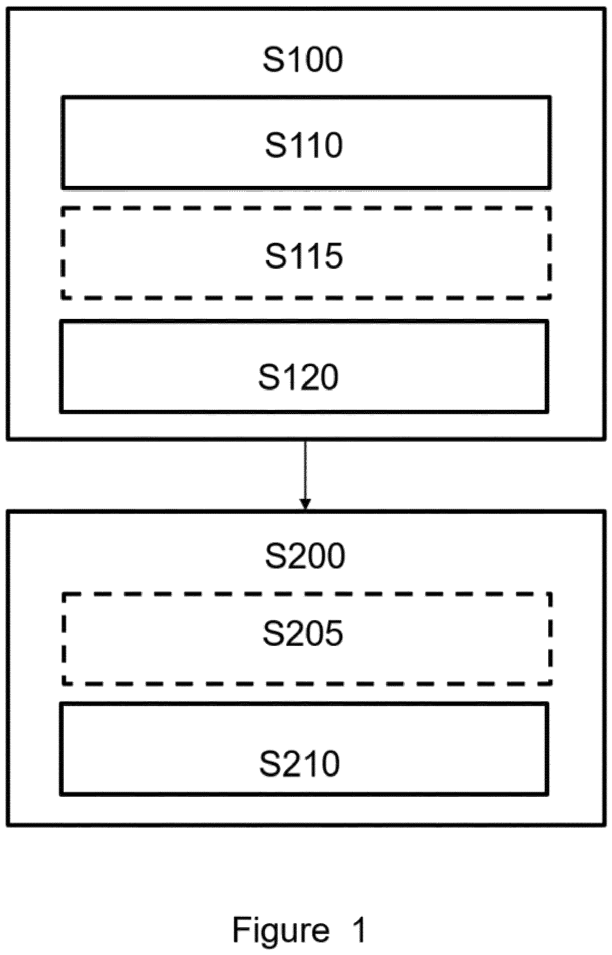

   [Fig. 1] illustre un procédé de prédiction d'au moins un paramètre représentatif d'une qualité de connexion selon un mode de réalisation
**Fig. 2**

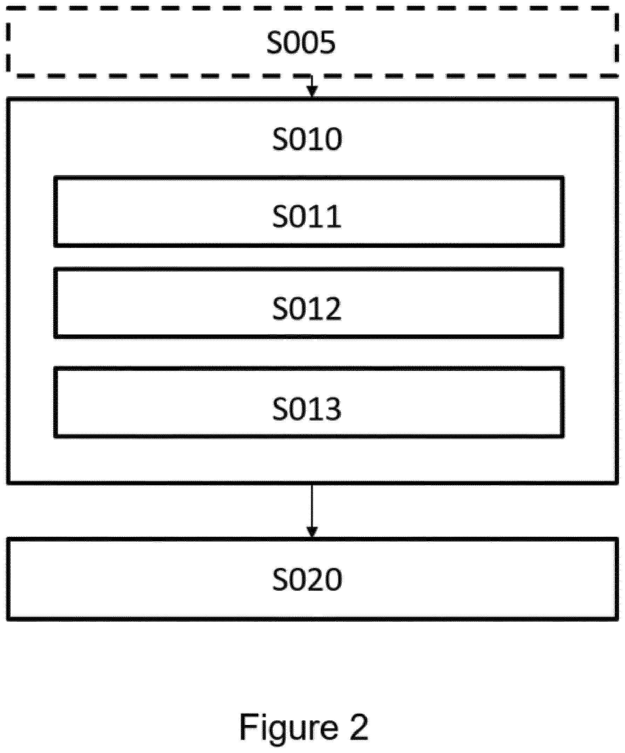

   [Fig. 2] illustre un procédé d'entrainement d'un modèle de prédiction configurée pour prédire au moins un paramètre représentatif d'une qualité de signal et d'une qualité de service selon un mode de réalisation
**Fig. 3**

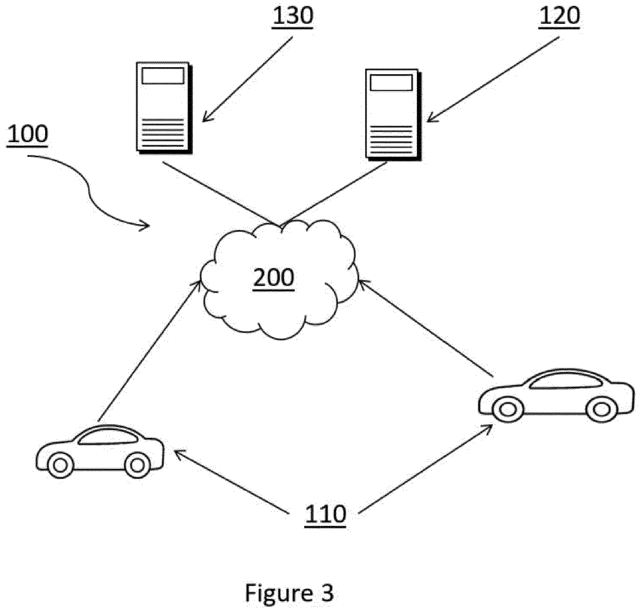

   [Fig. 3] illustre un système permettant d'entrainer au moins un modèle de prédiction par apprentissage supervisé d'au moins un paramètre représentatif d'une qualité de connexion selon un mode de réalisation.

### Description des modes de réalisation

Les dessins et la description ci-après contiennent, pour l'essentiel, des éléments de caractère certain. Ils pourront donc servir à mieux faire comprendre la présente invention.

Il est maintenant fait référence à la figure 1.

La figure 1 illustre un procédé de prédiction d'au moins un paramètre représentatif d'une qualité de signal et/ou de service susceptible d'être fournie à un moment donné et pour une position donnée d'un dispositif lorsque celui-ci est connecté à une antenne radiofréquence selon un mode de réalisation.

Dans le cadre de la présente demande, il peut s'agir de la prédiction d'un ou plusieurs paramètres représentatifs d'une qualité de signal et/ou d'une qualité de service. Concernant la qualité de signal, il peut s'agir d'au moins un paramètre représentatif d'une puissance reçue et d'autres paramètres additionnels tels qu'un rapport signal sur bruit, un nombre de blocs alloués à l'antenne, par exemple, ou de tout autre paramètre permettant d'évaluer si la puissance du signal sera suffisante pour permettre un transfert de données satisfaisant. Concernant la qualité de service, il peut s'agir d'au moins un paramètre représentatif d'une bande passante et d'autres paramètres additionnels tels qu'un débit, un taux de latence, d'un taux de pertes par paquets, d'un gigue ou de tout autre paramètre permettant d'évaluer le débit et/ou le temps de réponse associés à un transfert de données entre le dispositif et l'antenne. Le paramètre représentatif d'une qualité de signal et/ou de service peut également être au moins un paramètre calculé à partir d'une combinaison d'un ou plusieurs paramètres représentatifs d'une qualité de signal et/ou d'une qualité de service. Par exemple, plusieurs paramètres représentatifs de la qualité de service tels que la latence, le taux de perte de paquets, le débit et le gigue peuvent être utilisés pour déterminer une qualité de connexion permettant ensuite d'évaluer la qualité d'expérience utilisateur.

On notera que le terme « cellule » est couramment utilisé dans le domaine de la téléphonie mobile pour décrire une zone d'émission/réception d'une antenne et que, lorsque l'antenne radiofréquence est une antenne d'un réseau de téléphonie mobile, le terme cellule peut être utilisé.

Le procédé de prédiction comprend une étape S100 d'obtention de paramètres notamment relatifs à la position et au moment de prédiction et une étape S200 de prédiction d'au moins un paramètre représentatif d'une qualité de signal et/ou de service à l'aide d'au moins un modèle de prédiction configuré pour prédire au moins un paramètre représentatif d'une qualité de signal et/ou d'une qualité de service.

L'étape S100 comprend une sous-étape S110 de détermination du moment et de la position pour lesquels la prédiction doit être faite. Il peut s'agir de récupérer par exemple la date, l'heure et la position considérés dans une mémoire du calculateur mettant en oeuvre les étapes du procédé de prédiction. Il peut également s'agir d'estimer, sur un itinéraire prédéterminé d'un véhicule, l'instant et la date auxquels le véhicule devrait atteindre une position prédéterminée sur son itinéraire. Il est également possible, en fonction du modèle de prédiction utilisé, de déterminer s'il s'agit du même jour ou d'un jour de la semaine particulier dans une sous-étape optionnelle S115. De manière alternative, cette sous-étape peut être mise en oeuvre lors de l'étape S200 de prédiction d'au moins un paramètre représentatif d'une qualité de signal et/ou de service.

L'étape S 100 comprend une sous-étape S120 d'estimation d'au moins un paramètre de diminution de la qualité de signal et/ou de service à un moment prédéterminé et à une position prédéterminée. Le paramètre de diminution de la qualité de signal et/ou de service peut être choisi parmi un indicateur d'une condition météorologique affectant la propagation d'un signal radiofréquence dans l'air par exemple et un paramètre représentatif d'un nombre de dispositifs connectés à une antenne. Le paramètre représentatif d'un nombre de dispositifs connectés à une antenne est en d'autres termes un paramètre permettant d'évaluer une saturation d'une antenne, ce qui affecte de manière connue la qualité de signal et/ou de service.

L'indicateur d'une condition météorologique affectant la propagation d'un signal radiofréquence dans l'air peut par exemple être un taux d'hygrométrie. Le taux d'hygrométrie peut être estimé à partir de mesures d'un taux d'hygrométrie par exemple. En effet, lorsqu'une mesure récente est disponible à proximité de la position prédéterminée et qu'on peut supposer qu'elle va peu varier entre le moment où la mesure a été prise et le moment prédéterminé considéré, cette mesure peut être utilisée pour estimer le taux d'hygrométrie au moment prédéterminé et à la position prédéterminée. Il est également possible d'obtenir une indication relative à une condition météorologique telle que la pluie en détectant à bord de véhicules si les essuie-glaces sont allumés dans une zone proche de la position prédéterminée et si l'on suppose encore une fois que cette condition météorologique va peu varier. Il est également possible d'estimer un indicateur d'une condition météorologique à partir d'un site de prévisions météorologiques tel que la température, le taux d'ensoleillement, le risque de pluie et de neige, la vitesse du vent par exemple. Le taux d'hygrométrie lui-même peut être récupéré auprès du site de prévisions météorologiques.

Le paramètre représentatif d'un nombre de dispositifs connectés à une antenne peut être estimé à partir d'une mesure d'un nombre de dispositifs physiquement connectés à une antenne à un moment donné. Si l'intervalle de temps entre la mesure et l'estimation voulue est trop grand, il est possible d'entrainer un modèle de prédiction par apprentissage supervisé pour prédire le nombre de dispositifs connectés à une antenne à un moment donné, par exemple à une heure donnée, pour un jour de la semaine donné par exemple et d'estimer le nombre de dispositifs connectés à un moment donné à l'aide du modèle de prédiction.

Le paramètre représentatif d'un nombre de dispositifs connectés à une antenne peut être estimé indirectement en consultant un serveur ou un site spécialisé permettant de récupérer une mesure ou une estimation d'une densité de dispositifs présents dans une zone à proximité d'une position donnée à un moment donné. De telles données peuvent être fournies à partir de positions de dispositifs collectées par des applications mobiles dédiées fournissant des informations concernant des conditions de circulation par exemple.

L'étape S200 comprend une sous-étape S210 d'application d'au moins un modèle de prédiction configuré pour prédire au moins un paramètre représentatif d'une qualité de signal et/ou d'une qualité de service, à partir d'au moins un paramètre de diminution de la qualité de signal et/ou de service estimé lors de l'étape S110, d'une indication d'un moment et d'une position du dispositif pour lesquels la prédiction doit être mise en oeuvre, le modèle de prédiction ayant été préalablement entrainé par apprentissage supervisé sur une base de données d'entrainement, la base de données d'entrainement comprenant, pour une pluralité de dispositifs :
* au moins un paramètre représentatif d'une qualité de signal et/ou d'une qualité de service lorsque le dispositif est connecté à une antenne radiofréquence,
* un indicateur de la position du dispositif,
* un indicateur d'un moment de connexion du dispositif à l'antenne,
* au moins un paramètre de diminution de la qualité de signal et/ou de service.

L'indication d'un moment et d'une position du dispositif pour lesquels la prédiction doit être mise en oeuvre peut être différente, en fonction du modèle de prédiction utilisé. Concernant l'indication d'un moment, il peut s'agir, par exemple, dans un mode de réalisation, d'une date et d'un instant, c'est-à-dire une heure, tels que déterminés lors de l'étape S100 et, dans un autre mode de réalisation, d'un jour de la semaine et d'une heure. Concernant l'indication d'une position, il peut s'agir, dans un mode de réalisation, d'une position GNSS du dispositif déterminée lors de l'étape S100 et dans un autre mode de réalisation, d'une position relative du dispositif par rapport à une antenne, par exemple un angle et une distance entre le dispositif et l'antenne.

Dans un mode de réalisation, un unique modèle de prédiction est utilisé pour prédire un ou plusieurs paramètres d'une qualité de service et/ou d'une qualité de signal en fonction d'au moins un paramètre de diminution de la qualité de signal et/ou de service estimé lors de l'étape S110, d'une indication d'un moment et d'une position du dispositif pour lesquels la prédiction doit être mise en oeuvre.

Dans un autre mode de réalisation, l'étape S200 comprend en outre une étape S205, préalable à l'étape S210, de sélection d'au moins un modèle de prédiction parmi plusieurs modèles de prédiction, chaque modèle de prédiction ayant été préalablement entrainé par apprentissage supervisé à l'aide d'une base de données d'entrainement comprenant des données relatives aux dispositifs connectés à une antenne respective. Dans ce cas, l'indication d'une position relative du dispositif par rapport à l'antenne respective peut être utilisée. De manière avantageuse, il peut s'agir d'un angle et d'une distance entre le dispositif et l'antenne respective.

Ledit au moins un modèle de prédiction configuré pour prédire au moins un paramètre représentatif d'une qualité de signal et/ou d'une qualité de service peut être préalablement chargé dans une mémoire du calculateur mettant en oeuvre le procédé de prédiction ou déterminé par ce calculateur en mettant en oeuvre le procédé d'entrainement décrit en référence à la figure 2.

La figure 2 représente le procédé d'entrainement dudit au moins un modèle de prédiction d'au moins un paramètre représentatif d'une qualité de service et/ou d'une qualité de signal susceptible d'être fournie par une antenne.

Le procédé d'entrainement comprend une étape S010 de constitution d'une base de données d'entrainement et une étape S020 d'entrainement d'au moins un modèle de prédiction par apprentissage supervisé d'au moins un paramètre représentatif d'une qualité de signal et/ou d'une qualité de service, à partir de la base de données d'entrainement.

L'étape S010 de constitution d'une base de données d'entrainement comprend une sous-étape S011 de réception de données collectées par une pluralité de dispositifs, les données collectées comprenant, pour chaque dispositif :
- la mesure d'au moins un paramètre représentatif d'une qualité de signal et/ou d'une qualité de service lorsque le dispositif est connecté à une antenne radiofréquence,
- la position GNSS du dispositif lorsque le dispositif est connecté à l'antenne,
- la date et l'instant de connexion à l'antenne.

Comme indiqué précédemment pour l'étape S200, la position du dispositif peut être une position relative du dispositif par rapport à l'antenne, par exemple un angle et une distance entre le dispositif et l'antenne, qui peuvent être obtenues à partir des coordonnées GNSS absolues du dispositif. Ce mode de réalisation permet de simplifier l'entrainement du réseau de neurones. En variante, le réseau de neurones peut également être entrainé sur les coordonnées GNSS absolues.

La date et l'instant de connexion à l'antenne, pour chaque dispositif, sont des informations pertinentes pour le modèle car elles permettent au modèle de capter des variations de qualité de signal et/ou de service pouvant être cycliques, en fonction de la période de la journée, ou du jour de la semaine. Par exemple, le taux d'utilisation de cellules urbaines est plus élevé à certaines heures (en journée plutôt que la nuit), ou certains jours (par exemple les jours ouvrés). De plus, certains jours particuliers de l'année, comme par exemple des jours de célébrations nationales ou religieuses ou d'événements particuliers, par exemple sportifs, peuvent être des jours de très fortes sollicitations du réseau qui peuvent perturber la qualité du signal et/ou du service.

L'étape S010 comprend également une sous-étape S012 d'estimation, pour chaque dispositif connecté à une antenne à une date et à un instant de connexion donné, d'au moins un paramètre de diminution de la qualité de signal et/ou de service tel que décrit précédemment en référence à la figure 1. En particulier, la prise en compte d'une condition météorologique affectant la propagation d'un signal radiofréquence est avantageuse pour la construction du modèle car les conditions météorologiques, et en particulier le taux d'hygrométrie dans l'air, ont une influence significative sur la propagation des ondes et peuvent donc diminuer la qualité du signal et/ou du service. La prise en compte d'un nombre de dispositifs connectés à une antenne est également un paramètre avantageux puisqu'il fournit une indication du nombre concurrent de connexions à une antenne, et donc de la possible saturation de l'antenne, qui peut également réduire considérablement la qualité du signal et/ou du service.

L'étape S010 comprend également une sous-étape S013 de création d'au moins une base de données d'entrainement à partir d'au moins une partie des données collectées et d'au moins une partie des paramètres de diminution de la qualité de signal et/ou de service associée.

Lors de l'étape S020, au moins un modèle de prédiction par apprentissage supervisé est entrainé à partir d'une base de données d'entrainement pour prédire au moins un paramètre représentatif d'une qualité de signal et/ou d'une qualité de service. Avantageusement, l'entrainement d'un modèle de prédiction par apprentissage supervisé se fait par l'entrainement d'un réseau de neurones.

Dans un mode de réalisation, une pluralité de bases de données d'entrainement sont créées lors de l'étape S012 et une pluralité de modèles de prédiction par apprentissage supervisé sont entrainés à partir d'une base de données d'entrainement respective.

Dans un mode de réalisation, les données collectées lors de la sous-étape S011 comprennent en outre un identifiant de l'antenne à laquelle un dispositif a été connecté à une date et un instant de connexion donnés. Cet identifiant est utilisé lors de la sous-étape S012 de création d'au moins une base de données d'entrainement pour créer une pluralité de bases de données d'apprentissage, chaque base de données d'apprentissage comprenant des données relatives aux dispositifs connectés à une unique et même antenne ayant un identifiant prédéterminé et des paramètres de diminution de la qualité de signal et/ou de service à l'instant et à la date de connexion du dispositif considéré à l'antenne. Ensuite, lors de l'étape S020, une pluralité de modèles de prédiction est entrainée, chaque modèle de prédiction permettant de prédire au moins un paramètre représentatif d'une qualité de signal et/ou de service pour l'une des antennes considérées.

L'utilisation de plusieurs modèles de prédiction, chaque modèle de prédiction étant configuré pour prédire au moins un paramètre représentatif d'une qualité de signal et/ou de qualité de service pour une antenne donnée présente des avantages puisque l'on peut facilement mettre à jour le procédé de prédiction en ajoutant un modèle supplémentaire de prédiction pour la nouvelle antenne. Il suffit alors de créer une nouvelle base de données d'entrainement comprenant des données relatives aux dispositifs connectés à la nouvelle antenne et des paramètres de diminution de la qualité de signal et/ou de service à l'instant et à la date de connexion du dispositif considéré à la nouvelle antenne.

Dans le cas où un seul modèle de prédiction est utilisé, il faudrait créer une nouvelle base de données d'entrainement comprenant la base de données précédemment utilisée et les données relatives à la nouvelle antenne et les paramètres de diminution de la qualité de signal et/ou de service associés et remettre en oeuvre l'étape S020 d'entrainement sur la base de cette nouvelle base de données d'entrainement.

Il faut noter que la ou les bases de données d'entrainement créés lors de la sous-étape S013 comprennent, pour une pluralité de dispositifs :
* au moins un paramètre représentatif d'une qualité de signal et/ou d'une qualité de service lorsque le dispositif est connecté à une antenne radiofréquence,
* un indicateur de la position du dispositif,
* un indicateur d'un moment de connexion du dispositif à l'antenne,
* au moins un paramètre de diminution de la qualité de signal et/ou de service.

L'indicateur de la position du dispositif peut correspondre à la position GNSS du dispositif lorsqu'il est connecté à une antenne radiofréquence à une date et à un instant de connexion donné ou à la position relative de ce dispositif par rapport à l'antenne à laquelle il est connecté.

Dans ce cas, le procédé d'entrainement comprend également une étape préalable S005 de réception d'une base de données comprenant des identifiants de cellules d'antennes radiofréquence et des positions GNSS desdites cellules et la sous-étape S013 de création d'au moins une base de données comprend le calcul de la position relative du dispositif considéré par rapport à l'antenne à laquelle il est connecté à partir de la position GNSS du dispositif sélectionné et de la position GNSS de l'antenne à laquelle il est connecté.

L'utilisation de la distance relative d'un dispositif par rapport à l'antenne à laquelle il est connecté est particulièrement avantageux dans le cas décrit précédemment où l'on entraine un modèle de prédiction par antenne. L'entrainement du modèle de prédiction est alors plus rapide et plus fiable.

Concernant l'indicateur d'un moment de connexion du dispositif à l'antenne, il peut s'agir de la date et de l'instant, c'est-à-dire de l'heure, de connexion mais aussi d'un jour de la semaine et de l'heure de connexion par exemple. Il est en effet, plus facile de prédire des conditions de circulation ou de présence de personnes dans une zone prédéterminée selon le jour de la semaine et l'heure considérée.

Dans un mode de réalisation, le procédé d'entrainement est mis en oeuvre par le même calculateur que celui mettant en oeuvre le procédé de prédiction. Dans ce cas, les étapes S010 sont réalisées préalablement à l'étape S100. Dans un autre mode de réalisation, le procédé d'entrainement est mis en oeuvre par un autre calculateur puis transmis au calculateur mettant en oeuvre le procédé de prédiction.

La figure 3 illustre un système 100 comprenant un serveur distant 200 apte à être connecté à une pluralité de dispositifs s'étant connectés à plusieurs antennes radiofréquences pour différentes positions de celles-ci. Dans l'exemple illustré ici, il s'agit de véhicules 100 se déplaçant sur un réseau routier (non représenté). Le serveur distant 200 tout comme les véhicules 110 comprennent au moins une interface de communication, une mémoire et un calculateur. Le calculateur du serveur distant est configuré pour mettre en oeuvre le procédé d'entrainement d'au moins un modèle de prédiction décrit en référence à la figure 2 à partir notamment de données collectées par chacun des véhicules. La mémoire du serveur distant comprend donc des instructions de code pour la mise en oeuvre du procédé de prédiction.

Comme décrit précédemment, le serveur distant 200 peut également, optionnellement, être configuré pour se connecter à d'autres serveurs distants 120, 130. Par exemple, le serveur distant 120 peut être un serveur configuré pour fournir des prédictions météorologiques et donc transmettre une ou plusieurs indications relatives à une condition météorologique pour un moment donné et une position donnée. Le serveur distant 130 peut être un serveur configuré pour fournir des informations concernant des conditions de circulation par exemple.

Dans un mode de réalisation, le même serveur distant 200 peut être utilisé pour mettre en oeuvre le procédé de prédiction d'au moins un paramètre représentatif d'une qualité de signal et/ou de service décrit en référence à la figure 1. La mémoire du serveur distant comprend alors des instructions de code pour la mise en oeuvre du procédé de prédiction et le calculateur est configuré pour prédire au moins un paramètre représentatif d'une qualité de signal et/ou de service pouvant être obtenue par un dispositif lorsqu'il est connecté à une antenne radiofréquence parmi une pluralité d'antennes configurées pour établir une connexion avec ledit dispositif.

Dans ce cas, le calculateur du serveur distant est configuré pour mettre en oeuvre les étapes suivantes :
- estimation d'au moins un paramètre de diminution de la qualité de signal et/ou de service,
- prédiction d'au moins un paramètre représentatif d'une qualité de signal et/ou de service à l'aide d'au moins un modèle de prédiction configuré pour prédire au moins un paramètre représentatif d'une qualité de signal et/ou d'une qualité de service à partir d'un paramètre de diminution de la qualité de signal et/ou de service estimé, d'une indication d'un moment et d'une position du dispositif pour lesquels la prédiction doit être mise en oeuvre, le modèle de prédiction par apprentissage supervisé étant préalablement entrainé par apprentissage supervisé sur une base de données d'entrainement, la base de données d'entrainement comprenant, pour une pluralité de dispositifs :
   * au moins un paramètre représentatif d'une qualité de signal et/ou d'une qualité de service lorsque le dispositif est connecté à une antenne radiofréquence,
   * un indicateur de la position du dispositif,
   * un indicateur d'un moment de connexion du dispositif à l'antenne,
   * au moins un paramètre de diminution de la qualité de signal et/ou de service.

Dans un autre mode de réalisation, le modèle de prédiction peut être chargé dans une mémoire d'un autre serveur et le calculateur de ce serveur est configuré de la même manière. Cela est particulièrement intéressant lorsque les dispositifs dont les données sont collectées sont par exemple des téléphones mobiles. La prédiction d'une qualité de signal et/ou de service peut alors être consultée via un site distant pour des tâches de planification d'accès au réseau comportant les antennes.

## Revendications

1. Procédé de prédiction d'au moins un paramètre représentatif d'une qualité de signal et/ou d'une qualité de service susceptible d'être fournie à un dispositif lorsqu'il est connecté à une antenne radiofréquence parmi une pluralité d'antennes configurées pour établir une connexion avec ledit dispositif, procédé étant mise en oeuvre par un calculateur, le procédé comprenant :
- une étape d'obtention d'au moins un paramètre de diminution de la qualité de signal et/ou de service (S120) ,
- une étape de prédiction d'au moins un paramètre représentatif d'une qualité de signal et/ou de service (S200) par application d'au moins un modèle de prédiction configuré pour prédire au moins un paramètre représentatif d'une qualité de signal et/ou d'une qualité de service, à partir d'un paramètre de diminution de la qualité de signal et/ou de service estimé, d'une indication d'un moment et d'une position du dispositif pour lesquels la prédiction doit être mise en oeuvre, le modèle de prédiction ayant été préalablement entrainé par apprentissage supervisé sur une base de données d'entrainement, la base de données d'entrainement comprenant, pour une pluralité de dispositifs :
* au moins un paramètre représentatif d'une qualité de signal et/ou d'une qualité de service lorsque le dispositif est connecté à une antenne radiofréquence,
* un indicateur de la position du dispositif,
* un indicateur d'un moment de connexion du dispositif à l'antenne,
* au moins un paramètre de diminution de la qualité de signal et/ou de service,
le
procédé étant **caractérisé en ce que**:
- l'étape de prédiction comprend la sélection d'au moins un modèle de prédiction parmi plusieurs modèles de prédiction, chaque modèle de prédiction ayant été préalablement entrainé par apprentissage supervisé à l'aide d'une base de données d'entrainement comprenant des données relatives aux dispositifs connectés à une antenne respective, et
- l'indicateur de la position du dispositif est une position relative du dispositif par rapport à une antenne respective, le modèle de prédiction sélectionné correspondant au modèle de prédiction entrainé à l'aide d'une base de données d'entrainement comprenant la position relative du dispositif par rapport à l'antenne respective.

2. Procédé de prédiction selon la revendication 1, dans lequel le paramètre de diminution de la qualité de signal et/ou de service est un indicateur d'une condition météorologique affectant la propagation d'un signal radiofréquence dans l'air ou un paramètre représentatif du nombre de dispositifs connectés à une antenne.

3. Procédé de prédiction selon la revendication 2, dans lequel le paramètre représentatif du nombre de dispositifs connectés à l'antenne est un nombre de dispositifs connectés à l'antenne mesuré ou prédit.

4. Procédé de prédiction d'au moins un paramètre représentatif d'une qualité de signal et/ou de service selon l'une des revendications 1 à 3, dans lequel la position relative du dispositif comprend un angle et une distance entre le dispositif et l'antenne respective.

5. Procédé selon l'une quelconque des revendications précédentes, comprenant en outre la mise en oeuvre préalable d'un entrainement d'au moins un modèle de prédiction d'au moins un paramètre représentatif d'une qualité de service et/ou d'une qualité de signal susceptible d'être fournie par une antenne radiofréquence, comprenant :
une étape (S010) de constitution d'une base de données d'entrainement comprenant :
* une sous-étape de réception de données collectées par une pluralité de dispositifs (S011), les données collectées comprenant, pour chaque dispositif :
- la mesure d'au moins un paramètre représentatif d'une qualité de signal et/ou d'une qualité de service lorsque le dispositif est connecté à une antenne radiofréquence,
- la position GNSS du dispositif lorsque le dispositif est connecté à l'antenne,
- la date et l'instant de connexion à l'antenne,
*une sous-étape d'estimation, pour chaque dispositif connecté à une antenne à une date et à un instant de connexion donné (S012), d'au moins un paramètre de diminution de la qualité de signal et/ou de service,
* une sous-étape de création d'au moins une base de données d'entrainement (S013) à partir d'au moins une partie des données collectées et d'au moins une partie des paramètres de diminution de la qualité de signal et/ou de service associée, et
une étape d'entrainement (S020) d'au moins un modèle de prédiction par apprentissage supervisé d'au moins un paramètre représentatif d'une qualité de signal et/ou d'une qualité de service, à partir d'une base de données d'entrainement.

6. Procédé selon la revendication 5, dans lequel :
- les données collectées comprennent en outre un identifiant de l'antenne à laquelle un dispositif a été connecté à une date et un instant de connexion donnés,
- l'étape de constitution d'une base de données d'entrainement comprend la création d'une pluralité de bases de données d'entrainement, chaque base de données d'entrainement comprenant des données relatives aux dispositifs connectés à une antenne respective ayant un identifiant respectif et des paramètres de diminution de la qualité de signal et/ou de service associés,
- l'étape d'entrainement comprend l'entrainement d'un modèle de prédiction par apprentissage supervisé d'au moins un paramètre représentatif d'une qualité de signal et/ou d'une qualité de service sur chaque base de données d'entrainement de la pluralité de bases d'entrainement.

7. Procédé selon la revendication 6, dans lequel chaque base de données d'entrainement comprend une position relative de chaque dispositif par rapport à l'antenne respective à la date et à l'instant de connexion à l'antenne respective.

8. Procédé selon la revendication 7, dans lequel la position relative du dispositif par rapport à l'antenne respective comprend une distance et un angle entre le dispositif et l'antenne respective.

9. Procédé de prédiction d'une qualité de signal et/ou de service pouvant être obtenue sur un itinéraire prédéterminé d'un véhicule sur un réseau routier par une antenne radiofréquence parmi une pluralité d'antennes configurées pour établir une connexion avec ledit dispositif, la méthode étant mise en oeuvre par un calculateur, la méthode comprenant :
- l'estimation d'un instant et d'une date à laquelle le véhicule devrait atteindre une position prédéterminée sur l'itinéraire- la prédiction d'au moins un paramètre représentatif d'une qualité de signal et/ou de service par la mise en oeuvre d'un procédé de prédiction selon l'une quelconque des revendications 1 à 8 à l'instant et à la date déterminée, à la position prédéterminée sur l'itinéraire.

10. Produit programme d'ordinateur, comprenant des instructions de code pour la mise en oeuvre d'un procédé selon l'une quelconque des revendications précédentes, lorsqu'il est mis en oeuvre par un calculateur.

11. Calculateur, configuré pour la mise en oeuvre du procédé selon l'une quelconque des revendications 1 à 9.

## Patentansprüche

1. Verfahren zum Vorhersagen von mindestens einem Parameter, der für eine Signalqualität und/oder eine Dienstqualität repräsentativ ist, die an eine Vorrichtung geliefert werden kann, wenn sie mit einer Funkantenne aus einer Vielzahl von Antennen verbunden ist, die so konfiguriert sind, dass sie eine Verbindung mit der Vorrichtung herstellen, wobei das Verfahren von einem Rechner durchgeführt wird und das Verfahren Folgendes aufweist:
- einen Schritt zum Erhalten von mindestens einem Parameter zur Verringerung der Signal- und/oder Dienstqualität (S120),
- einen Schritt zum Vorhersagen von mindestens einem Parameter, der für eine Signal- und/oder Dienstqualität repräsentativ ist (S200), durch Anwendung von mindestens einem Vorhersagemodell, das so konfiguriert ist, dass es mindestens einen Parameter, der für eine Signalqualität und/oder Dienstqualität repräsentativ ist, ausgehend von einem geschätzten Parameter zur Verringerung der Signalqualität und/oder Dienstqualität, einer Angabe eines Zeitpunkts und einer Position der Vorrichtung vorhersagt, für die die Vorhersage durchgeführt werden soll, wobei das Vorhersagemodell zuvor durch überwachtes Lernen auf einer Trainingsdatenbank trainiert wurde, wobei die Trainingsdatenbank für eine Vielzahl von Vorrichtungen Folgendes aufweist:
* mindestens einen Parameter, der für eine Signalqualität und/oder eine Dienstqualität repräsentativ ist, wenn die Vorrichtung mit einer Funkantenne verbunden ist,
* einen Indikator für die Position der Vorrichtung,
* einen Indikator für einen Zeitpunkt der Verbindung der Vorrichtung mit der Antenne,
* mindestens einen Parameter zur Verringerung der Signal- und/oder Dienstqualität,
wobei das Verfahren durch Folgendes gekennzeichnet ist:
- der Schritt zum Vorhersagen beinhaltet die Auswahl von mindestens einem Vorhersagemodell aus mehreren Vorhersagemodellen, wobei jedes Vorhersagemodell zuvor durch überwachtes Lernen unter Verwendung einer Trainingsdatenbank trainiert wurde, die Daten über die Vorrichtungen enthält, die mit einer jeweiligen Antenne verbunden sind, und
- der Indikator der Position der Vorrichtung ist eine relative Position der Vorrichtung bezüglich einer jeweiligen Antenne, wobei das ausgewählte Vorhersagemodell dem Vorhersagemodell entspricht, das unter Verwendung einer Trainingsdatenbank trainiert wurde, die die relative Position der Vorrichtung bezüglich der jeweiligen Antenne enthält.

2. Verfahren zum Vorhersagen nach Anspruch 1, wobei der Parameter zur Verringerung der Signalqualität und/oder Dienstqualität ein Indikator für eine Wetterbedingung ist, die die Ausbreitung eines Funksignals in der Luft beeinflusst, oder ein Parameter, der für die Anzahl der mit einer Antenne verbundenen Vorrichtungen repräsentativ ist.

3. Verfahren zum Vorhersagen nach Anspruch 2, wobei der Parameter, der für die Anzahl der mit der Antenne verbundenen Vorrichtungen repräsentativ ist, eine gemessene oder vorhergesagte Anzahl der mit der Antenne verbundenen Vorrichtungen ist.

4. Verfahren zum Vorhersagen von mindestens einem Parameter, der für eine Signal- und/oder Dienstqualität repräsentativ ist, nach einem der Ansprüche 1 bis 3, wobei die relative Position der Vorrichtung einen Winkel und einen Abstand zwischen der Vorrichtung und der jeweiligen Antenne aufweist.

5. Verfahren nach einem der vorhergehenden Ansprüche, das darüber hinaus die vorherige Durchführung eines Trainings von mindestens einem Vorhersagemodell für mindestens einen Parameter aufweist, der für eine Dienstqualität und/oder eine Signalqualität repräsentativ ist, die von einer Funkantenne geliefert werden kann, und das Folgendes aufweist:
einen Schritt (S010) zum Erstellen einer Trainingsdatenbank mit:
* einem Unterschritt zum Empfangen von Daten, die von einer Vielzahl von Vorrichtungen (S011) gesammelt wurden, wobei die gesammelten Daten für jede Vorrichtung Folgendes aufweisen:
- die Messung von mindestens einem Parameter, der für eine Signalqualität und/oder eine Dienstqualität repräsentativ ist, wenn die Vorrichtung mit einer Funkantenne verbunden ist,
- die GNSS-Position der Vorrichtung, wenn die Vorrichtung mit der Antenne verbunden ist,
- Datum und Uhrzeit der Verbindung mit der Antenne,
* einen Unterschritt zum Schätzen von mindestens einem Parameter zur Verringerung der Signal- und/oder Dienstqualität für jede Vorrichtung, die zu einem bestimmten Datum und einer bestimmten Uhrzeit der Verbindung (S012) mit einer Antenne verbunden ist,
* einen Unterschritt zum Erstellen von mindestens einer Trainingsdatenbank (S013) aus mindestens einem Teil der gesammelten Daten und mindestens einem Teil der Parameter zur Verringerung der zugehörigen Signal- und/oder Dienstqualität
und
einen Schritt zum Trainieren (S020) von mindestens einem Vorhersagemodell durch überwachtes Lernen von mindestens einem Parameter, der für eine Signalqualität und/oder eine Dienstqualität repräsentativ ist, ausgehend von einer Trainingsdatenbank.

6. Verfahren nach Anspruch 5, wobei:
- die gesammelten Daten darüber hinaus eine Kennung der Antenne enthalten, mit der eine Vorrichtung zu einem bestimmten Datum und einer bestimmten Uhrzeit der Verbindung verbunden wurde,
- der Schritt zum Erstellen einer Trainingsdatenbank das Erstellen einer Vielzahl von Trainingsdatenbanken aufweist, wobei jede Trainingsdatenbank Daten über die Vorrichtungen enthält, die mit einer jeweiligen Antenne verbunden sind, die eine jeweilige Kennung und zugehörige Parameter zur Verringerung der Signal- und/oder Dienstqualität aufweist,
- wobei der Schritt zum Trainieren das Trainieren eines Vorhersagemodells durch überwachtes Lernen von mindestens einem Parameter, der für eine Signalqualität und/oder eine Dienstqualität repräsentativ ist, auf jeder Trainingsdatenbank der Vielzahl von Trainingsdatenbanken aufweist.

7. Verfahren nach Anspruch 6, wobei jede Trainingsdatenbank eine relative Position jeder Vorrichtung bezüglich der jeweilige Antenne zum Datum und zur Uhrzeit der Verbindung mit der jeweiligen Antenne aufweist.

8. Verfahren nach Anspruch 7, wobei die relative Position der Vorrichtung bezüglich der jeweiligen Antenne einen Winkel und einen Abstand zwischen der Vorrichtung und der jeweiligen Antenne aufweist.

9. Verfahren zum Vorhersagen einer Signal- und/oder Dienstqualität, die auf einer vorbestimmten Route eines Fahrzeugs auf einem Straßennetz durch eine Funkantenne aus einer Vielzahl von Antennen erreicht werden kann, die so konfiguriert sind, dass sie eine Verbindung mit der Vorrichtung herstellen, wobei das Verfahren von einem Rechner durchgeführt wird und das Verfahren Folgendes aufweist:
- das Schätzen einer Uhrzeit und eines Datums, zu der/dem das Fahrzeug eine vorbestimmte Position auf der Route erreichen sollte,
- das Vorhersagen von mindestens einem Parameter, der für eine Signal- und/oder Dienstqualität repräsentativ ist, durch das Durchführen eines Verfahrens zum Vorhersagen nach einem der Ansprüche 1 bis 8 zu einer bestimmten Uhrzeit und einem bestimmten Datum an der vorbestimmten Position auf der Route.

10. Computerprogrammprodukt, das Codeanweisungen zum Durchführen eines Verfahrens nach einem der vorhergehenden Ansprüche aufweist, wenn es von einem Rechner durchgeführt wird.

11. Rechner, der zum Durchführen des Verfahrens nach einem der Ansprüche 1 bis 9 konfiguriert ist.

## Claims

1. Method for predicting at least one parameter representative of a signal quality and/or of a service quality liable to be delivered to a device when it is connected to one radiofrequency antenna among a plurality of antennas that are configured to establish a connection with said device, the method being implemented by a computer, the method comprising:
- a step of obtaining at least one parameter of decrease in the signal and/or service quality (S120),
- a step of predicting at least one parameter representative of a signal and/or service quality (S200) by applying at least one prediction model configured to predict at least one parameter representative of a signal quality and/or of a service quality, on the basis of an estimated parameter of decrease in the signal and/or service quality, and of an indication of a moment and of a position of the device for which the prediction must be carried out, the prediction model having been trained beforehand via supervised learning on a training database, the training database comprising, for a plurality of devices:
* at least one parameter representative of a signal quality and/or of a service quality when the device is connected to a radiofrequency antenna,
* an indicator of the position of the device,
* an indicator of a moment of connection of the device to the antenna,
* at least one parameter of decrease in the signal and/or service quality,
the method being **characterized in that**:
- the prediction step comprises selecting at least one prediction model from among a plurality of prediction models, each prediction model having been trained beforehand via supervised learning using a training database comprising data relating to the devices that are connected to a respective antenna, and
- the indicator of the position of the device is a relative position of the device in relation to a respective antenna, the selected prediction model corresponding to the prediction model trained using a training database comprising the relative position of the device in relation to the respective antenna.

2. Prediction method according to Claim 1, wherein the parameter of decrease in signal and/or service quality is an indicator of a meteorological condition affecting the propagation of a radiofrequency signal through the air or a parameter representative of the number of devices connected to an antenna.

3. Prediction method according to Claim 2, wherein the parameter representative of the number of devices connected to the antenna is a measured or predicted number of devices connected to the antenna.

4. Method for predicting at least one parameter representative of a signal and/or service quality according to one of Claims 1 to 3, wherein the relative position of the device comprises an angle and a distance between the device and the respective antenna.

5. Method according to any one of the preceding claims, further comprising the prior implementation of training at least one model for predicting at least one parameter representative of a service quality and/or of a signal quality liable to be delivered by a radiofrequency antenna, comprising:
a step (S010) of establishing a training database comprising:
* a sub-step of receiving data collected by a plurality of devices (S011), the collected data comprising, for each device:
- the measurement of at least one parameter representative of a signal quality and/or of a service quality when the device is connected to a radiofrequency antenna,
- the GNSS position of the device when the device is connected to the antenna,
- the date and time of connection to the antenna,
* a sub-step of estimating, for each device connected to an antenna at a given date and at a given time of connection (S012), at least one parameter of decrease in the signal and/or service quality,
* a sub-step of creating at least one training database (S013) on the basis of at least some of the collected data and of at least some of the parameters of decrease in the signal and/or service quality associated therewith,
and
a step (S020) of training at least one prediction model via supervised learning of at least one parameter representative of a signal quality and/or of a service quality, from a training database.

6. Method according to Claim 5, wherein:
- the collected data further comprise an identifier of the antenna to which a device has been connected at a given date and time of connection,
- the step of establishing a training database comprises the creation of a plurality of training databases, each training database comprising data relating to the devices connected to a respective antenna having a respective identifier and parameters of decrease in the signal and/or service quality associated therewith,
- the training step comprises training a prediction model via supervised learning of at least one parameter representative of a signal quality and/or of a service quality on each training database of the plurality of training databases.

7. Method according to Claim 6, wherein each training database comprises a relative position of each device in relation to the respective antenna at the date and time of connection to the respective antenna.

8. Method according to Claim 7, wherein the relative position of the device in relation to the respective antenna comprises a distance and an angle between the device and the respective antenna.

9. Method for predicting a signal and/or service quality that can be obtained on a predetermined route of a vehicle on a road network by one radiofrequency antenna among a plurality of antennas that are configured to establish a connection with said device, the method being implemented by a computer, the method comprising:
- estimating a time and date at which the vehicle should reach a predetermined position on the route - predicting at least one parameter representative of a signal and/or service quality by implementing a prediction method according to any one of Claims 1 to 8 at the determined time and date, at the predetermined position on the route.

10. Computer program product comprising code instructions for implementing a method according to any one of the preceding claims, when it is implemented by a computer.

11. Computer configured to implement the method according to any one of Claims 1 to 9.
